# EUROPEAN PATENT APPLICATION

(11) **EP 2 119 677 A1**
(43) Date of publication of application: **18.11.2009**
(21) Application number: 09157911.0
(22) Date of filing: 15.04.2009
(51) Int. Cl.: C02F 9/00, C02F 1/00, C02F 1/28, C02F 1/44, C02F 1/32, B01D 61/02, B01D 61/14, B01D 61/08, B01D 61/18

(54) **A water filter device for domestic use**

(30) Priority: 08.05.2008 IT MI20080835
(71) Applicant: Proacqua Group S.r.l., 38068 Rovereto (TN) (IT)
(72) Inventor: Dulger, Viktor, 38068, Rovereto (TRENTO) (IT)
(74) Representative: Corradini, Corrado

(57) **Abstract**

A water filter device for domestic use, comprising a supply line of water to be filtered, at least a filter means, a line for collection of the filtered water and a discharge line of water to be discharged, in which the elements are associated to a portable pack which further comprises a container tank for water to be purified and a pump which removes water from the container tank in order to supply the water filter device.

## Description

The invention relates to a water filter device for domestic use.

Water filtering or purifying devices for domestic use in the prior art are connected to the municipal water supply, from which they take water to be purified and comprise at least a filter element, for example a reverse osmosis element. The devices are able to remove noxious substances from the water such as aluminium, arsenic, chlorine, lead, sulphates, bacteria, viruses and others, providing, starting from the entering water, purified water suitable for food use and for drinking, while a further and unpurified portion of the water is discharged.

Some prior art plants exploit the pressure of the municipal water supply, typically 3 bar, while others exploit the presence of a pump to cause the water to circulate in the device.

In any case water purifying plants of the above-described type exhibit a first drawback due to the need to be connected to the municipal water supply.

This fact means that the plant must be used in a certain type of domestic environment.

Further, plants of this type are complex and expensive, partly due to the required installation and connect-up procedures to the municipal water supply.

The aim of the present invention is to obviate the above-mentioned drawbacks, by means of a water filter device for domestic use which does not require connection to the municipal water supply.

A further aim of the invention is to free the water filter device from the municipal water supply such as to render it portable and autonomous.

The aims are attained by a water filter device for domestic use, comprising a supply line of water to be filtered, at least a filter means, a line for collecting the filtered water and a discharge line of the water to be discharged, **characterised in that** the elements are associated to a portable pack which further comprises a container tank (1) for the water to be purified and a pump (2) which removes the water from the tank (1) in order to supply the device.

In particular, the filter means can comprise at least a reverse osmosis element.

The device of the invention exhibits the evident advantage of being autonomous, i.e. unhitched from the municipal water supply, and can thus be portable and used also externally of the domestic environment, for example in a second or holiday home, or in another location.

This fact is of great importance, also because it enables users constantly to have the option of purifying the water of noxious substances, with evident benefits for health and quality of life.

Further characteristics of the invention will emerge from the dependent claims.

Further characteristics and advantages of the invention will emerge from a reading of the following description, provided by way of non-limiting example with the aid of the figures of the tables of drawings, in which:
figure 1 is a diagram of the main components of the filter device of the invention;
figure 2 is a diagram of the main components of the device in a first variant of the invention;
figure 3 is a diagram of the main components of the device in a second variant of the invention;
figure 4 is a diagram of the main components of the device in a third variant of the invention;
figure 5 is a diagram of the main components of the device in a fourth variant of the invention.

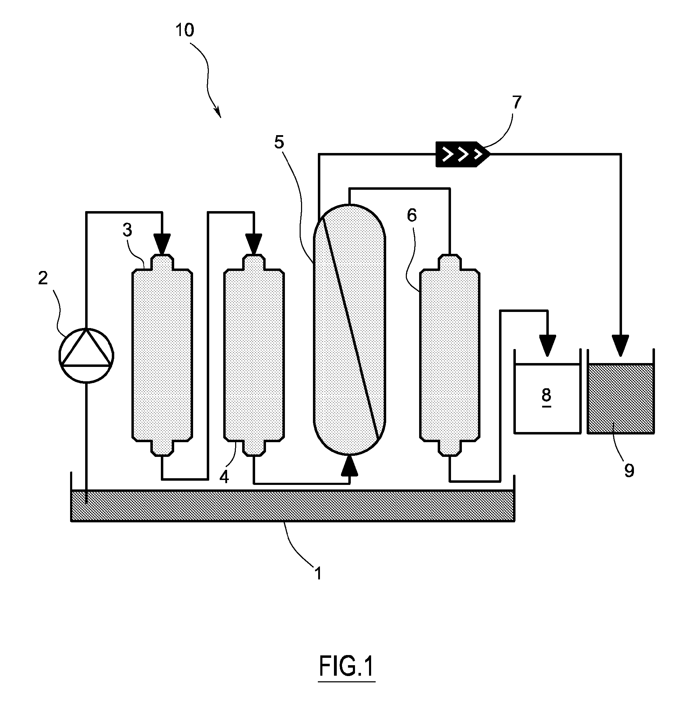

Figure 1 illustrates a water filter device for domestic use of the present invention, denoted in its entirety by 10.

In particular, figure 1 shows a tank 1 for water to be purified, from which tank 1 a pump 2 accesses the water and supplies a sediment filter 3 and a charcoal filter 4.

The water to be filtered is then passed through a reverse osmosis filter 5, from which a first line leads the water to cross a charcoal filter 6. After passing through the charcoal filter 6 the water reaches a potable-water tank 8 ready for use, while a second line, exiting from the reverse osmosis filter, leads the water to be discharged, which after having passed through a flow reducer 7 is deposited in a special tank 9.

The functioning principle of the reverse osmosis filter is of known type in the art and for the sake of simplicity will not be further illustrated, its being sufficient to mention that it is based on a membrane the pores of which are so fine as to allow only the water molecules to pass through, while retaining all the larger molecules.

All the components of the filter device indicated in the diagram of figure 1 and in those of the following figures are contained in a single portable container, which only requires being connected to an electrical supply source.

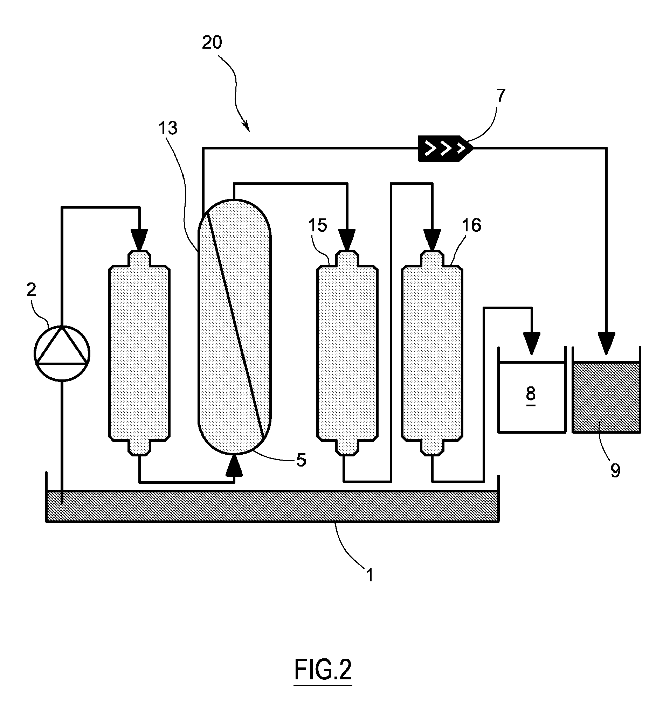

Figure 2 illustrates a variant of the water filter device, denoted by number 20.

In this case, for the sake of simplicity, the components which are the same as those in the previous diagram are denoted using the same numbers.

In this case, first a ceramic prefilter 18 containing live charcoal is supplied, followed by the reverse osmosis filter 5, from which a first line leads, taking the water to cross a further charcoal filter 15 and a UV ray lamp filter, after which the water is sent to the potable water tank.

A second line leading from the reverse osmosis filter 5 takes the discharge water to a flow reducer 7 and thence into a waste tank 9.

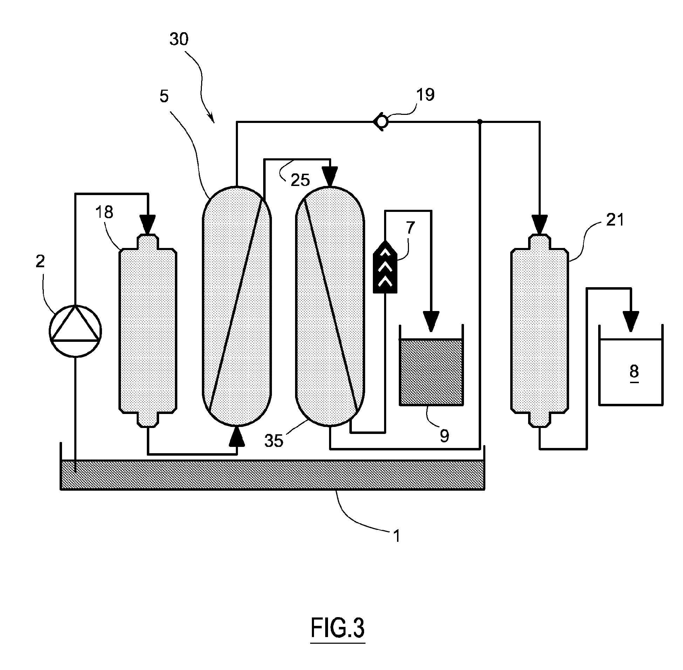

Figure 3 shows a further variant of the water filter device of the invention, denoted by number 30.

In this case, leading from the tank 1, first a ceramic charcoal prefilter 18 is supplied, followed by a first reverse osmosis filter 5.

A first line leads from there to a check valve 19, after which it takes the water towards a further filter element 21 which can be a charcoal filter or a UV lamp and thence to the potable water tank 8 for use.

A second line 25 leads from the first reverse osmosis filter 5, taking first discharge water which is supplied to a second reverse osmosis filter 35.

A first line leads from the second reverse osmosis filter 35, which first line joins with the line exiting the check valve 19 and thus sends the water through the filter element 21 in order to reach the potable water tank 8, while a second line exiting from the second reverse osmosis filter 35 takes the water to be discharged, which water, after first passing through the flow reducer 7, enters the waste tank 9.

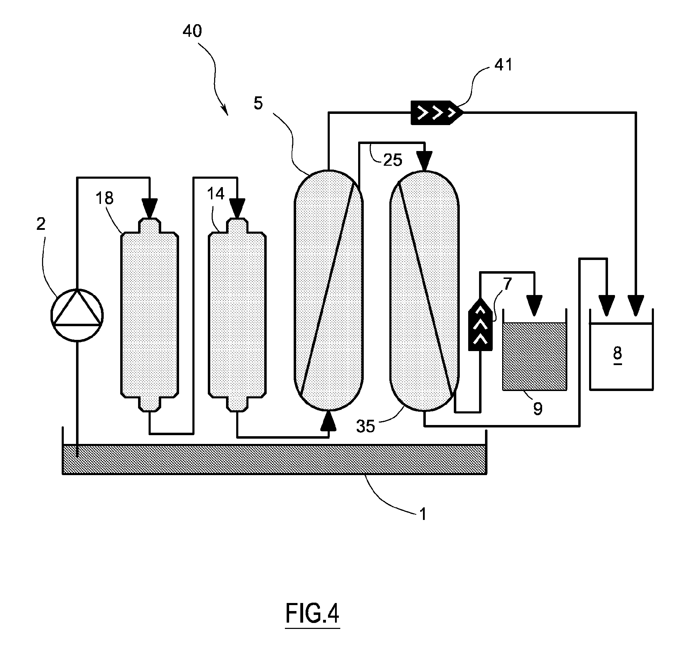

Figure 4 illustrates a further variant of the water filter device of the invention, denoted by reference number 40.

In this case, a pair of prefilters 18, 14 are supplied by the tank 1 for the water to be purified, followed by a first reverse osmosis filter 5.

From the first reverse osmosis filter 5, the water passes through a flow reducer 41 and takes the purified water from the first reverse osmosis filter 5 towards the potable water tank 8 for use.

A second line 25 for first discharge water also leads from the first reverse osmosis filter 5, which second line 25 supplies the water to a second reverse osmosis filter 35.

A first filtered water line leads from the second reverse osmosis filter 35, which takes the water to the potable water tank 8, while a second line exiting from the second reverse osmosis filter 35 takes the water to be discharged, which after having crossed the flow reducer 7 enters the waste tank 9.

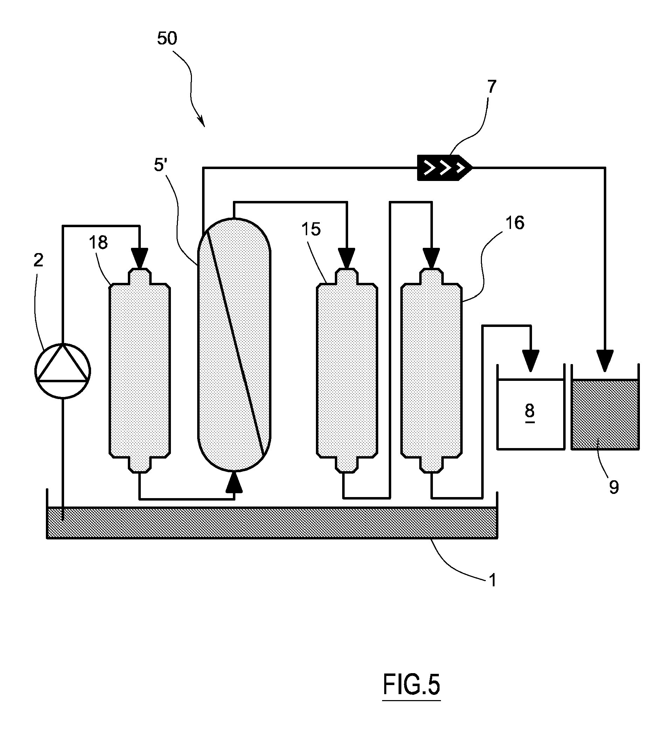

Figure 5 shows a further variant of the water filter device of the invention, denoted by reference number 50.

In this case, the tank 1 for the water to be purified is supplied first to a ceramic charcoal prefilter 18, or, in a further and preferred embodiment, to several prefilters located in succession, and thereafter to the reverse osmosis filter.

Alternatively to the reverse osmosis filter, shown in figure 5, it is possible to use an ultra-filter or a nano-filter element 5'.

A first line leads from the reverse osmosis filter or the ultra- or nano-filter element 5', which first line takes the water through an optional further charcoal filter 15, and then to a UV ray lamp filter 21, after which the water passes into the potable water tank 8.

A second line exiting the reverse osmosis filter, or the ultra- or nano-filter element 5', takes the water to be discharged, which water first flows through a flow reducer 7 before flowing into a waste tank 9.

Each of the diagrams of figures 1 to 5 has been described bearing in mind that the plant diagrams related to filter devices contained within a portable pack, thus guaranteeing all the advantages of the invention.

Obviously modifications or improvements to the invention, dictated by contingent or special requirements, can be made without its forsaking the ambit of the invention as claimed herein below.

## Claims

1. A water filter device for domestic use, comprising a supply line of water to be filtered, at least a filter means, a line for collection of the filtered water and a discharge line of water to be discharged, **characterised in that** the elements are associated to a portable pack which further comprises a container tank (1) for water to be purified and a pump (2) which removes water from the container tank (1) in order to supply the water filter device.

2. The water filter device of claim 1, **characterised in that** the filter means comprises at least a reverse osmosis element (5).

3. The water filter device of claim 2, **characterised in that** a sediment filter (3) and a charcoal filter (4) are present in succession, upstream of the reverse osmosis element (5).

4. The water filter device of claim 2, **characterised in that** a first line downstream of the reverse osmosis element (5) takes the filtered water from the reverse osmosis element (5) to a charcoal filter (6) and **in that** a second line downstream of the reverse osmosis element (5) takes discharge water to a waste tank (9).

5. The water filter device of claim 2, **characterised in that** a ceramic charcoal prefilter (18) is located upstream of the reverse osmosis (5) element.

6. The water filter device of claim 2, **characterised in that** a first line leads from downstream of the reverse osmosis element (5), which first line takes the filtered water from the reverse osmosis element (5) to a charcoal filter (15) and a UV ray lamp filter (21), after passing through which the water is taken to a potable water tank (8).

7. The water filter device of claim 2, **characterised in that** a second reverse osmosis filter (35) is located downstream of the reverse osmosis filter (5).

8. The water filter device of claim 1 or 2, **characterised in that** the filter means comprises an ultra- or a nano-filter element (5').
